(19) **Europäisches Patentamt / European Patent Office / Office européen des brevets**

(11) **EP 1 258 975 B1**

(12) **FASCICULE DE BREVET EUROPEEN**

(45) Date de publication et mention
de la délivrance du brevet:
**30.09.2015 Bulletin 2015/40**

(51) Int Cl.:
***H02M 3/07*** (2006.01)

(21) Numéro de dépôt: **01201889.1**

(22) Date de dépôt: **18.05.2001**

(54) **Circuit de régulation pour un générateur haute tension**

Regelungsschaltung für Hochspannungsgenerator

Control circuit for high voltage generator

(84) Etats contractants désignés:
**AT BE CH CY DE DK ES FI FR GB GR IE IT LI LU MC NL PT SE TR**

(43) Date de publication de la demande:
**20.11.2002 Bulletin 2002/47**

(73) Titulaire: **EM Microelectronic-Marin SA**
**2074 Marin (CH)**

(72) Inventeurs:
- **Perotto, Jean-Félix**
  **2013 Colombier (CH)**
- **Rey, Olivier**
  **2523 Lignières (CH)**

(74) Mandataire: **Ravenel, Thierry Gérard Louis et al**
**ICB**
**Ingénieurs Conseils en Brevets SA**
**Faubourg de l'Hôpital 3**
**2001 Neuchâtel (CH)**

(56) Documents cités:
**WO-A-98/27477     US-A- 4 326 134**
**US-A- 5 945 870     US-A- 6 002 599**

- **PATENT ABSTRACTS OF JAPAN vol. 1995, no. 03, 28 avril 1995 (1995-04-28) & JP 06 351229 A (SONY CORP), 22 décembre 1994 (1994-12-22)**

## Description

La présente invention concerne un circuit de régulation pour un générateur haute tension, utilisé notamment pour alimenter une mémoire non volatile. Le circuit de régulation comprend un modulateur d'amplitude qui reçoit en entrée au moins deux signaux d'horloge et qui fournit en sortie au moins deux signaux d'horloge modulés à une pompe de charge. Il comprend également une boucle de rétroaction, qui relie une sortie de la pompe de charge audit modulateur d'amplitude. Cette boucle de rétroaction comprend un comparateur qui reçoit en entrée une grandeur de sortie de la pompe de charge et une grandeur de référence, et qui fournit en sortie un signal de commande pour le modulateur d'amplitude.

Ces circuits sont généralement utilisés pour alimenter des mémoires programmables non volatile du type EEPROM. La régulation de la tension de sortie d'une pompe de charge permet de réduire la consommation d'énergie de la pompe de charge et de ne pas soumettre les cellules mémoires programmables à de trop fortes contraintes notamment lors des phases d'écriture et d'effacement.

Un tel circuit de régulation par modulation des signaux d'horloge reçus en entrée est déjà connu dans l'art antérieur, notamment de la demande de brevet WO 98 / 27477. Ce document présente un circuit permettant de réguler la sortie d'une pompe de charge en faisant varier l'amplitude et la fréquence des signaux d'horloge reçus en entrée. Le circuit décrit fait apparaître une combinaison entre une modulation en fréquence et une modulation en amplitude. Une boucle de rétroaction est utilisée pour commander les modulateurs d'amplitude et de fréquence suivant les besoins en courant ou en tension en sortie de la pompe de charge. En effet, suivant la charge placée en sortie de la pompe, la puissance consommée varie sensiblement. Il est donc intéressant de pouvoir agir sur la pompe de charge pour qu'elle fournisse en sortie la puissance adéquate.

Dans ce document, comme représenté à la figure 1, un oscillateur à fréquence variable 1 délivre un ou plusieurs signaux d'horloge multiphasés 2. Ces signaux d'horloge sont ensuite modulés en amplitude au travers d'une unité de modulation d'amplitude 3. Cette unité 3 fournit à la pompe de charge 4 des signaux d'horloge modulés 5 en amplitude permettant de commander les étages de la pompe. La pompe de charge 4 délivre en sortie une tension surélevée HV destinée à alimenter une mémoire non volatile, non représentée. La charge correspondante à la mémoire est représentée sous la forme d'une résistance variable Rc 7, placée en sortie du circuit de régulation.

La haute tension HV fournie en sortie de la pompe de charge 4 est dérivée dans une boucle de rétroaction qui comprend en série un comparateur 8 et un couple de décodeurs AM et FM, respectivement 9 et 10. Le comparateur 8 reçoit donc la haute tension de sortie HV délivrée par la pompe de charge 4, ainsi qu'une tension de référence Vref, délivrée par un générateur de tension continue 6, proportionnelle à la tension nécessaire pour l'alimentation de la mémoire. Le résultat de la comparaison 11 est transmis aux décodeurs 9 et 10, chargés d'envoyer des signaux de commande pour les unités de modulation. Le décodeur AM 9 commande l'unité de modulation d'amplitude 3, et le décodeur FM 10 commande l'unité de modulation de fréquence 12.

L'unité de modulation de fréquence 12 est reliée à l'oscillateur à fréquence variable 1 et permet suivant la commande reçue du décodeur FM 10, c'est-à-dire suivant les besoins de la charge 7 et / ou les variations de la tension d'alimentation du circuit, de moduler la fréquence des signaux d'horloge 2.

L'unité de modulation d'amplitude 3 comprend une combinaison de transistors MOS alimentés par une tension continue VDD et reliés à des inverseurs recevant les signaux d'horloge 2. Suivant la commande reçue du décodeur AM 9, il est possible d'obtenir une commande discrète en tension des inverseurs à deux ou trois niveaux, par exemple, VDD et VDD - VGS, VGS étant la tension de seuil d'un des transistors. Ces différents niveaux de tension permettent de moduler, de manière discrète, l'amplitude des signaux d'horloge 2 reçus par les inverseurs placés en entrée de la pompe de charge 4.

Un tel circuit de régulation présente néanmoins quelques inconvénients. Notamment la modulation d'amplitude est limitée aux deux ou trois niveaux de tension accessibles. De plus, ces niveaux de tension sont élevés, soit la tension de charge maximale (Vdd), soit une tension de charge proche de cette tension maximale (Vdd-Vgs) et dépendant de la tension d'alimentation du circuit (Vdd). Ainsi, dans le cas d'une faible charge 7, la puissance requise en sortie de la pompe de charge 4 est également faible, et la régulation obtenue par modulation d'amplitude des signaux d'horloge est insuffisante. Dans ce cas, la consommation d'énergie reste trop élevée. De même, en cas d'une augmentation de la tension d'alimentation du circuit (Vdd), l'économie d'énergie est inefficace, puisque dépendant de ladite tension d'alimentation (Vdd).

C'est pourquoi ce document propose la combinaison entre une unité de modulation d'amplitude 3 et une unité de modulation de fréquence 12. Mais cette combinaison a pour effet de compliquer sensiblement le circuit de régulation, que ce soit au niveau du décodage ou que ce soit au niveau de l'oscillateur qui doit être à fréquence variable. Ces éléments sont complexes et prennent une place importante sur le circuit intégré.

Dans le brevet US 6,002,599, il est décrit un circuit de régulation de tension pour un générateur haute tension utilisé pour l'alimentation d'une mémoire non volatile. Ce circuit comprend un générateur de signaux d'horloge modulés adaptables, qui reçoit en entrée deux signaux d'horloge et fournit en sortie deux signaux d'horloge modulés à une pompe de charge. La pompe de charge fournit en sortie une haute tension sur la base des signaux d'horloge modulés. Le circuit comprend également une boucle de rétroaction dans laquelle sont disposés un diviseur de tension et un comparateur pour comparer la tension en sortie du diviseur avec une tension de référence afin de fournir un signal de commande au générateur de signaux d'horloge modulés adaptables. Un inconvénient de ce circuit est qu'il n'est pas fournir un signal de commande analogique pour bien adapter les signaux d'horloge modulés pour la pompe de charge.

Une solution à ce problème est définie dans la demande de brevet JP 06-351229 où dans la boucle de rétroaction du circuit de régulation il est prévu des variations d'une résistance d'un transistor, ainsi qu'un filtre passe-bas en entrée du transistor en sortie du comparateur. Toutefois ce circuit de régulation ne permet pas de fournir un signal de commande analogique, qui peut varier sur une large gamme afin d'obtenir une plage de commande importante.

Il est également connu de l'art antérieur, notamment du brevet US 5,945,870, un circuit de régulation uniquement au moyen d'une modulation d'amplitude des signaux d'horloge. Comme il est représenté à la figure 2, le circuit de régulation, selon ce document, comprend un oscillateur 1 fournissant un signal d'horloge 2. Ce signal 2 est ensuite modulé en amplitude dans une unité 3 qui fournit un signal d'horloge modulé 5, en amplitude, à une pompe de charge 4, qui délivre une haute tension HV en sortie du circuit. L'unité de modulation d'amplitude 3 est commandée par un générateur de tension variable 6, lui-même contrôlé par un circuit de synchronisation temporelle 13.

Le générateur 6 est capable de délivrer en sortie un grand nombre de niveaux de tension Vref entre une tension VDD et 0. Ces niveaux de tension commandent des inverseurs présents dans l'unité de modulation d'amplitude 3, lesdits inverseurs étant placés en entrée de la pompe de charge 4, afin de moduler l'amplitude des signaux d'horloge 2 reçus par ces mêmes inverseurs.

Néanmoins, un tel circuit présente également quelques inconvénients. Notamment, l'absence de boucle de rétroaction nécessite l'utilisation d'un circuit de synchronisation temporelle 13 connaissant à l'avance la réponse en sortie en fonction du temps, et donc connaissant la charge Rc 7 placée en sortie de la pompe 4. La charge 7 utilisée doit donc être fixe et connue, ce qui restreint considérablement les possibilités d'utilisation du circuit. Dans le cas d'une nouvelle charge, le circuit de synchronisation temporelle 13 doit être reprogrammé.

De plus, un générateur de tension variable 6, tel qu'il est décrit, comprend un nombre d'étages équivalent au nombre de niveaux de tension qui peuvent être générés, ce qui le rend rapidement complexe et volumineux sur le circuit intégré.

Afin d'éviter les inconvénients susmentionnés de l'art antérieur, la présente invention concerne un circuit de régulation tel que défini dans la revendication indépendante 1.

Des formes d'exécution particulières du circuit de régulation sont définies dans les revendications dépendantes 2 à 8.

Un tel circuit de régulation est avantageux en ce qu'il est simple et économique en place occupée sur le circuit intégré. En effet, la solution proposée ne comporte ni de combinaison de modulation de fréquence et d'amplitude, nécessitant l'utilisation d'un oscillateur à fréquence variable, ni de générateur de tension variable contrôlé par un circuit de synchronisation.

De plus, la commande envoyée au modulateur d'amplitude est un signal analogique pouvant varier sur une large gamme permettant d'obtenir une plage de commande importante avec une résolution très fine, et permet ainsi de réguler la puissance consommée en sortie de la pompe de charge même pour des variations importantes de la charge et / ou de la tension d'alimentation du circuit.

Un autre avantage de l'invention est de réguler la haute tension de sortie afin de prolonger au maximum la durée de vie des cellules mémoires programmables. C'est pourquoi, la tension de régulation choisie est une tension proche de la tension dite de « claquage » des transistors présents dans la mémoire non volatile. Ainsi, cette haute tension de sortie est juste suffisante pour programmer les cellules mémoires et n'est pas trop importante de manière à ne pas les programmer sous des conditions de stress fort.

Dans un mode de réalisation avantageux de l'invention, la comparaison effectuée en sortie de la pompe de charge est une comparaison entre un courant de claquage d'une jonction drain-substrat d'un transistor placé en sortie, claquant de manière similaire à ceux utilisés dans les cellules mémoires programmables, et un courant de référence.

L'invention va être expliquée ci-dessous en détail par un mode d'exécution donné uniquement à titre d'exemple, cette exécution étant illustrée par les dessins annexés parmi lesquels :

- La Figure 1 représente un circuit de régulation selon un art antérieur ;
- La Figure 2 représente un circuit de régulation selon un autre art antérieur ;
- La Figure 3 représente schématiquement le circuit de régulation selon l'invention ;
- La Figure 4 représente de manière détaillée le circuit de régulation selon l'invention ;

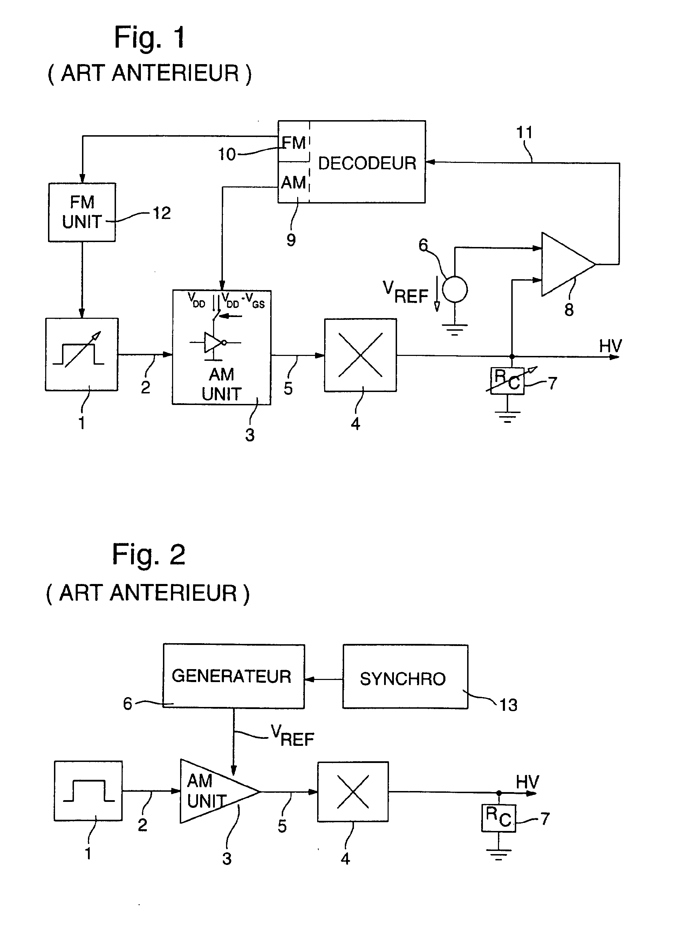

Les figures 1 et 2 ont déjà été décrites dans le cadre de la présentation de l'art antérieur.

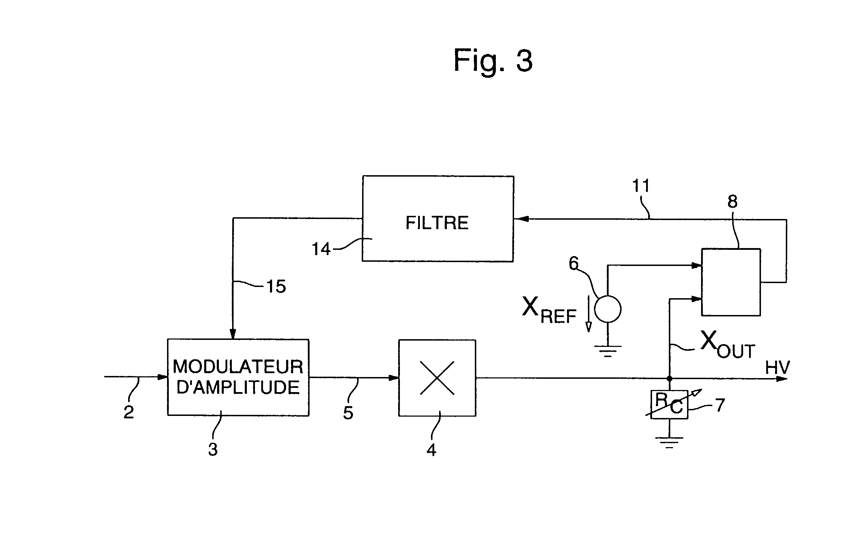

La figure 3 est une représentation schématique, suivant un modèle similaire à la présentation de l'art antérieur, du circuit de régulation selon l'invention. Un oscillateur, non représenté, fournit en entrée du circuit un signal d'horloge biphasé 2. Un modulateur d'amplitude 3 reçoit en entrée ce signal d'horloge 2 et le transforme en un signal d'horloge biphasé modulé 5. Ce signal modulé 5 permet de commander les différents étages d'une pompe de charge 4 qui délivre en sortie du circuit une tension surélevée HV, servant à alimenter une mémoire non volatile, représentée au moyen d'une charge équivalente Rc 7 variable.

Le circuit de régulation comporte une boucle de rétroaction dans laquelle figurent un comparateur 8 ainsi qu'un filtre passe-bas 14. Une grandeur de sortie Xout est récupérée pour être fournie en entrée du comparateur 8, qui reçoit également à une deuxième entrée une grandeur de référence Xref fournie par un générateur 6. Le résultat de la comparaison 11 est filtré au travers du filtre passe-bas 14, afin d'être transformé en un signal analogique 15 de commande du modulateur d'amplitude 3. Le filtre 14 assure également la stabilité de la boucle de régulation.

La grandeur de sortie Xout peut être notamment un courant ou une tension, la grandeur de référence Xref étant une grandeur homogène à la grandeur de sortie Xout. Tant que cette grandeur de sortie Xout est inférieure à la grandeur de référence Xref, le résultat de la comparaison 11 reste nul. La commande 15 est donc nulle, c'est-à-dire qu'aucune modulation d'amplitude n'est effectuée. Le signal d'horloge 4, en sortie du modulateur d'amplitude 3, correspond au signal d'horloge 2 inversé.

Lorsque la grandeur de sortie Xout devient supérieure à la grandeur de référence Xref, le résultat de la comparaison 11 devient positif et le signal de commande analogique 15 augmente de façon à ce que l'amplitude du signal d'horloge 4 diminue. Le signal d'horloge 2 est donc modulé en amplitude en sortie du modulateur 3, suivant l'évolution de la commande 15.

Comme la tension de sortie HV de la pompe de charge 4 est dépendant de l'amplitude des phases du signal d'horloge modulé 5 reçu ainsi que du nombre d'étages constituant la pompe 4, cette tension HV peut être diminuée ou augmentée suivant l'amplitude des phases du signal modulé 5.

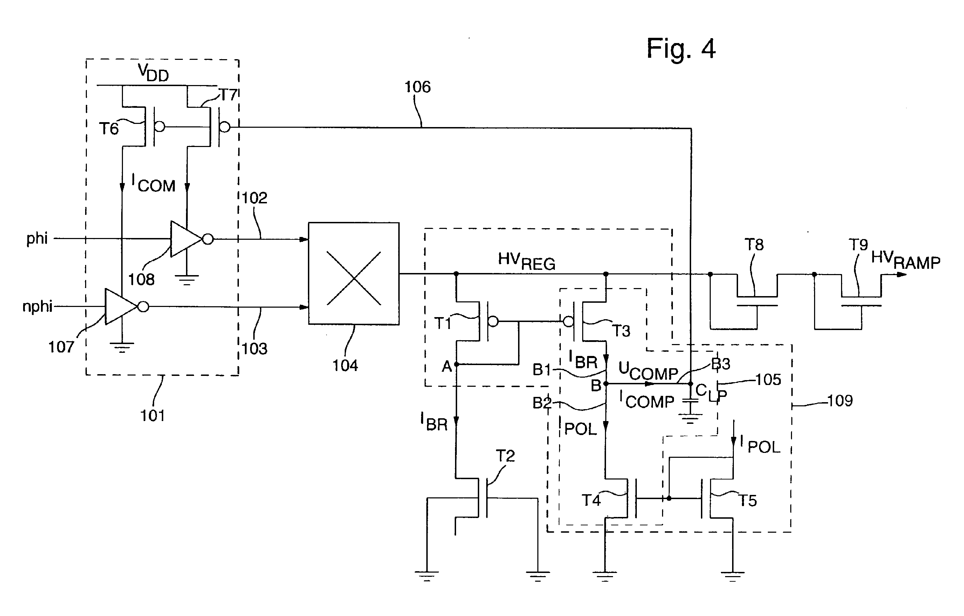

La figure 4 est une représentation détaillée du circuit de régulation selon l'invention. De préférence, on utilisera deux signaux d'horloge ou de manière équivalente un signal d'horloge biphasé, mais il est toutefois possible d'utiliser quatre signaux d'horloge ou un signal d'horloge dit quadriphasé ou encore toute autre combinaison de signaux d'horloge permettant d'optimiser l'élévation de la tension de la pompe de charge.

Dans l'exemple illustré, il s'agit de deux signaux d'horloge où les signaux phi et nphi sont sensiblement déphasés de 180°. Un modulateur d'amplitude 101 reçoit en entrée les deux signaux phi et nphi et fournit à sa sortie deux signaux d'horloge modulés 102 et 103 à une pompe de charge 104.

Classiquement, on utilisera une pompe de charge de type Dickson fournissant une haute tension HVreg de sortie positive. Il est toutefois possible d'utiliser un autre type de pompe de charge, notamment une pompe de charge négative.

Les transistors utilisés, dans cet exemple de réalisation, sont des transistors de technologie MOS. Les transistors PMOS se différencient des transistors NMOS par l'apposition d'un cercle au niveau de leur grille.

Afin de réduire la puissance consommée en sortie, l'objectif de ce circuit est de réguler cette tension de sortie HVreg à la valeur d'une tension dite de « claquage » Ubr des transistors utilisés dans la mémoire. On entend par tension de claquage, la tension de la jonction drain-substrat d'un transistor MOS, lorsque l'intensité du champ électrique dans la jonction atteint la valeur nécessaire pour que se produise le premier choc ionisant parmi les porteurs de charge constituant le faible courant inverse.

Pour déterminer si la tension de sortie HVreg a atteint la tension de claquage Ubr, un transistor T2 à source flottante, claquant de manière similaire à ceux utilisés dans les cellules mémoires, est placé en sortie de la pompe de charge 104. Ainsi, la tension appliquée en entrée de la mémoire sera toujours la plus élevée possible, sans pour autant soumettre les transistors présents dans la mémoire à des conditions de stress fort, compte tenu de la chute de tension dans des transistors T8 et T9 placés à cet effet.

Dès que la tension de sortie HVreg dépasse cette tension de claquage Ubr, le transistor T2 se met en claquage et un courant de claquage Ibr apparaît dans la branche entre le noeud A et le drain du transistor T2.

Par ailleurs, un courant de référence dit de « polarisation » Ipol permet de fixer le niveau de détection du claquage du transistor T2. Un comparateur 109, formé par les transistors T1, T3, T4 et T5 permet de comparer ces deux courants Ibr et Ipol. Le résultat de la comparaison sert de commande de la boucle de rétroaction. Le but ainsi recherché est de réguler ce courant de claquage Ibr à la valeur du courant de polarisation Ipol.

Le courant de claquage Ibr est miré au moyen des transistors T1 et T3, formant un premier miroir de courant. On retrouve donc le même courant Ibr dans la branche B1 entre la source du transistor T3 et le noeud B. Le courant de polarisation Ipol est miré au moyen des transistors T4 et T5, formant un deuxième miroir de courant. Ainsi, on retrouve le courant Ipol dans la branche B2 entre le drain du transistor T4 et le noeud B. Le courant partant du noeud B dans la boucle de rétroaction est un courant de comparaison Icomp entre le courant de claquage Ibr et le courant de polarisation Ipol. D'après la loi des noeuds, appliquée au noeud B, ce courant vaut Ibr - Ipol. La grandeur réellement utilisée pour rétroagir sur le modulateur d'amplitude est la tension Ucomp correspondante à ce courant de comparaison Icomp. Cette tension Ucomp est donnée par la relation suivante :

$$Ucomp = G * ( Ibr - Ipol )$$

où G représente la transrésistance du comparateur 109 de courant formé par les transistors T1, T3, T4 et T5.

L'exemple donné utilise un comparateur de courant mais il est également possible d'utiliser un dispositif équivalent permettant de comparer la tension de claquage à une tension de référence.

Un filtre passe-bas 105, par exemple formé par un condensateur Clp et par la conductance des transistors T3 et T4, est introduit dans la boucle. Ainsi la commande envoyée aux grilles des transistors T6 et T7 est une commande analogique 106. En effet, le filtre permet de supprimer les harmoniques élevées de la tension de comparaison Ucomp, et de ne laisser passer que sa composante continue (DC). Il est à noter que l'exemple donné est constitué préférentiellement par un filtre passe-bas du premier ordre, mais pourrait également être constitué par un filtre passe-bas du deuxième ordre.

Cette tension de commande analogique 106, une fois le circuit de régulation stabilisé, varie entre 0 volt et une tension proche de la tension d'alimentation du circuit Vdd, généralement quelques volts.

En effet, tant que le courant de claquage Ibr est nul, le noeud B se comporte comme un noeud capacitif. Aucun courant ne circule dans la branche B1 entre la source du transistor T3 et le noeud B, et le courant de polarisation Ipol sort du noeud B vers le drain du transistor T4. Le potentiel du noeud B décroît capacitivement. On peut donc assimiler Ucomp à une tension nulle, pour un courant de claquage Ibr nul.

Une fois la tension de claquage Ubr atteinte en sortie de la pompe de charge 104, le courant de claquage Ibr apparaît et est miré dans la branche B1, ce courant Ibr entrant dans le noeud B. Lorsque le courant entrant Ibr devient supérieur au courant sortant Ipol, la tension Ucomp au noeud B augmente et rétroagit sur le modulateur d'amplitude 101 afin de réduire l'action de la pompe de charge 104, ce qui permet de rentrer dans la phase de régulation proprement dite.

Durant cette phase de régulation, le courant de claquage Ibr varie de manière contrôlée en comparaison du courant de polarisation Ipol fixé, ce qui entraîne des variations contrôlées de la tension de comparaison Ucomp. Il est à noter que les variations de la tension de comparaison Ucomp, durant cette phase de régulation, sont autour d'une tension légèrement supérieure au seuil Vtn du transistor T4, référencée au potentiel de référence Vss. La tension de comparaison Ucomp est donc inférieure tout en restant indépendante de la tension d'alimentation du circuit Vdd. Ces caractéristiques de la tension Ucomp permettent notamment de réguler la puissance consommée en fonction des variations de la charge Rc, mais également en fonction des variations de la tension d'alimentation du circuit Vdd.

Le modulateur d'amplitude 101 comprend des moyens de réglage, tels que par exemple deux transistors T6 et T7, recevant la tension de commande analogique 106, en série avec deux inverseurs 107 et 108. Les transistors T6 et T7 sont connectés de telle sorte que leur drain est relié à la tension d'alimentation Vdd, leur source est reliée aux deux inverseurs, respectivement 107 et 108, et leur grille est reliée à la tension de commande 106. Durant la phase de régulation, la tension de commande est toujours inférieure à la tension d'alimentation Vdd, les transistors T6 et T7 sont donc toujours dans un état passant.

D'une manière classique, les inverseurs utilisés sont des transistors CMOS constitués d'un premier transistor PMOS en série avec un second transistor NMOS. L'inverseur 107 est donc constitué par les transistors P107 et N107, non représentés, et l'inverseur 108 est constitué par les transistors P108 et N108, également non représentés.

Le transistor T6 a sa source reliée à une alimentation continue VDD, son drain relié à la source du transistor P107 et sa grille reçoit la tension 106 de commande analogique. Le transistor P107 a son drain relié à la source du transistor N107 et sa grille reliée à celle du transistor N107, le transistor N107 ayant son drain relié à un potentiel de référence. Les grilles des transistors P107 et N107 reçoivent le signal d'horloge nphi, et le drain du transistor P107 ainsi que la source du transistor N107 délivrent le signal d'horloge modulé 103.

Il en est de même pour l'agencement des transistors T7, P108 et N108, le signal d'horloge reçu étant phi et le signal d'horloge modulé étant le signal 102. Ainsi, chaque signal d'horloge (phi, nphi) est modulé au travers des inverseurs 107 et 108 pour donner en sortie les signaux modulés 102 et 103. Il est à noter que de préférence on utilisera autant d'inverseurs que de signaux d'horloge en entrée.

Le courant Icom passant depuis le drain de chacun des transistors T6 et T7 vers leur source respective dépend de la valeur de cette tension de commande 106. Si la tension de commande 106 est nulle, le courant Icom délivré aux inverseurs 107 et 108, par les transistors T6 et T7, est maximal. En revanche, si la tension 106 augmente, le courant Icom délivré aux inverseurs 107 et 108, par les transistors T6 et T7, diminue. Il est important de noter que la tension de commande 106 étant analogique, le courant Icom délivré aux inverseurs 107 et 108 est également analogique.

L'inverseur 107 reçoit en entrée le signal d'horloge nphi et l'inverseur 108 reçoit en entrée le signal d'horloge phi. Les deux inverseurs sont alimentés sensiblement par le même courant Icom fourni par la boucle de rétroaction. Ainsi, ils sont commandés en courant de manière analogique.

Suivant un autre mode de réalisation de l'invention, non représenté, les deux transistors T6 et T7 sont remplacés par un seul transistor permettant de commander au moyen d'un unique courant Icom les deux inverseurs 107 et 108.

Le fonctionnement global du circuit de régulation se traduit par l'élévation d'une tension HVreg en sortie de la pompe 104 jusqu'à la tension de claquage Ubr prédéfinie. Une fois ce niveau atteint, un courant de claquage Ibr apparaît, ce courant est comparé à un courant de polarisation Ipol prédéfini. Le résultat de la comparaison est utilisé sous forme d'une tension de comparaison Ucomp. Cette tension Ucomp est filtrée au moyen d'un filtre passe-bas 105 pour obtenir une tension de commande analogique 106. Cette tension de commande 106 rétroagit sur le modulateur d'amplitude 101 placé en entrée de la pompe de charge 104. Ce modulateur d'amplitude 101 transforme la tension de commande 106 reçue en un courant de commande analogique Icom, courant qui permet de moduler l'amplitude des signaux d'horloge phi et nphi utilisés pour commander la pompe de charge 104. Cette modulation de l'amplitude a pour effet de réduire la tension HVreg en sortie de la pompe. Inversement, lorsque la tension de sortie HVreg est inférieure à la tension de claquage Ubr, la tension de commande 106 rétroagit de manière à faire fonctionner de nouveau la pompe de charge 104 au maximum de ses capacités. Le résultat est la régulation de la tension de sortie HVreg autour de la tension de claquage Ubr.

Il est à noter qu'en réalité la tension HVreg effective de régulation en sortie de la pompe de charge est une tension HVreg_égale à la tension de claquage Ubr à laquelle vient s'ajouter la tension de seuil du transistor T1. Cette tension de régulation étant supérieure à la tension de claquage Ubr, préférablement au moins un transistor est placé en sortie du circuit afin d'abaisser ladite tension. Dans l'exemple représenté, deux transistors T8 et T9 sont placés en sortie du circuit de régulation afin d'abaisser cette tension HVreg de deux tensions de seuil. Ainsi, la tension Hvramp que reçoit la mémoire est inférieure d'une tension de seuil environ à la tension de claquage Ubr.

Selon, une variante de l'invention, il est également possible de relier la source du transistor T2 à un potentiel de référence Vss, comme la masse du circuit. Dans ce cas, la tension de claquage de ce transistor est déterminée soit par le claquage de la jonction drain-substrat, soit par le claquage du canal court dudit transistor.

Il est à noter que la description mentionne la génération d'une haute tension positive, mais il est également possible de réaliser un circuit de régulation équivalent en générant une haute tension négative.

Il est également à noter que la description mentionne l'utilisation de transistors de technologie MOS, mais il est également possible de réaliser le même circuit de régulation en utilisant des transistors de technologie bipolaire.

Il est bien entendu que la description n'est donnée qu'à titre d'exemple et que d'autres modes de réalisation peuvent faire l'objet de la présente invention.

## Revendications

1. Circuit de régulation pour générateur haute tension, utilisé notamment pour alimenter une mémoire non volatile, comprenant un modulateur d'amplitude (3 ; 101) recevant en entrée au moins deux signaux d'horloge (2 ; phi, nphi), et fournissant en sortie au moins deux signaux d'horloge modulés (5 ; 102, 103) à une pompe de charge (4 ; 104), une boucle de rétroaction reliant une sortie de la pompe de charge audit modulateur d'amplitude, ladite boucle comprenant un comparateur (8 ; 109) recevant en entrée une grandeur de sortie (Xout ; Ibr) de ladite pompe de charge et une grandeur de référence (Xref ; Ipol), et fournissant en sortie un signal de comparaison (11 ; Ucomp), le modulateur d'amplitude (101) comprenant des moyens de réglage (T7, T6) recevant un signal de commande analogique (106), lesdits moyens de réglage étant en série avec au moins un inverseur (108, 107), lesdits moyens de réglage permettant de commander ledit inverseur par au moins un courant de commande (Icom) dépendant du signal de commande analogique (106),
caractérisé en ce que ladite boucle de rétroaction comprend en outre un filtre passe-bas (14 ; 105) analogique en sortie dudit comparateur transformant ledit signal de comparaison en un signal de commande (15 ; 106) analogique pour ledit modulateur d'amplitude, et
en ce que ledit comparateur (109) est un comparateur de courant,
en ce que ladite grandeur de sortie (Ibr) de la pompe de charge est un courant de claquage d'une jonction drain-substrat d'un transistor (T2) à source flottante, ledit transistor étant placé en sortie de la pompe de charge, et
en ce que ladite grandeur de référence (Ipol) est un courant de polarisation fixant le niveau de détection du claquage.

2. Circuit de régulation pour générateur haute tension selon la revendication 1, caractérisé en ce que lesdits moyens de réglage sont composés d'au moins un transistor (T7).

3. Circuit de régulation pour générateur haute tension selon la revendication 1, caractérisé en ce que ledit comparateur (109) comprend un premier miroir de courant (T1 et T3) mirant ledit courant de claquage (Ibr) dans une première branche (B1) vers un noeud B et un deuxième miroir de courant (T4 et T5) mirant ledit courant de polarisation (Ipol) dans une deuxième branche (B2) vers ledit noeud B, ledit noeud B comportant une troisième branche (B3) traversée par un courant de comparaison (Icomp) lié au signal de comparaison (Ucomp).

4. Circuit de régulation pour générateur haute tension selon la revendication 3, caractérisé en ce que ledit premier miroir de courant (T1 et T3) est composé d'un premier transistor (T1) et d'un second transistor (T3), ledit premier transistor (T1) étant connecté entre la sortie de la pompe de charge (104) et ledit transistor (T2) à source flottante, ledit second transistor (T3) étant connecté entre la sortie de la pompe de charge et ladite première branche (B1) reliée au noeud B, et en ce que ledit deuxième miroir de courant (T4 et T5) est composé d'un troisième transistor (T5) et d'un quatrième transistor (T4), ledit troisième transistor (T5) étant connecté entre la source de courant de polarisation et ledit potentiel de référence (Vss), ledit quatrième transistor (T4) étant connecté entre ledit potentiel de référence (Vss) et ladite deuxième branche (B2) reliée au noeud B.

5. Circuit de régulation pour générateur haute tension selon l'une des revendications 3 et 4, **caractérisé en ce que** ledit filtre passe-bas (105) analogique est constitué par une capacité (Clp) connectée entre le potentiel de référence (Vss) et ladite troisième branche (B3) reliée au noeud B, et par la conductance des second et quatrième transistors (T3 et T4) des miroirs de courant.

6. Circuit de régulation pour générateur haute tension selon l'une des revendications 3, 4 et 5, **caractérisé en ce qu'**au moins un autre transistor (T8, T9) est placé en sortie de la pompe de charge (104) pour être relié à une mémoire non volatile.

7. Circuit de régulation pour générateur haute tension selon l'une des revendications précédentes, **caractérisé en ce que** lesdits au moins deux signaux d'horloge (phi, nphi) sont sensiblement déphasés de 180°.

8. Circuit de régulation pour générateur haute tension selon la revendication 1, **caractérisé en ce que** ledit modulateur d'amplitude (101) reçoit en entrée quatre signaux d'horloge, ledit modulateur comprenant des moyens de réglage et quatre inverseurs recevant chacun un desdits signaux d'horloge.

**Patentansprüche**

1. Regulierungsschaltung für Hochspannungsgenerator, der insbesondere verwendet wird, um einen nichtflüchtigen Speicher zu versorgen, mit einem Amplitudenmodulator (3; 101), der am Eingang wenigstens zwei Taktsignale (2; phi, nphi) empfängt und am Ausgang wenigstens zwei modulierte Taktsignale (5; 102, 103) an eine Ladungspumpe (4; 104) liefert, und einer Rückkopplungsschleife, die einen Ausgang der Ladungspumpe mit dem Amplitudenmodulator verbindet, wobei die Schleife einen Komparator (8; 109) enthält, der am Eingang eine Ausgangsgröße (Xout; Ibr) der Ladungspumpe und eine Referenzgröße (Xref; Ipol) empfängt und am Ausgang ein Vergleichssignal (11; Ucomp) liefert, wobei der Amplitudenmodulator (101) Regulierungsmittel (T7, T6) enthält, die ein analoges Steuersignal (106) empfangen, wobei die Regulierungsmittel mit wenigstens einem Inverter (108, 107) in Reihe geschaltet sind, wobei die Regulierungsmittel ermöglichen, den Inverter durch wenigstens einen von dem analogen Steuersignal (106) abhängenden Steuerstrom (Icom) zu steuern,

**dadurch gekennzeichnet, dass** die Rückkopplungsschleife außerdem am Ausgang des Komparators ein analoges Tiefpassfilter (14; 105) umfasst, das das Vergleichssignal in ein analoges Steuersignal (15; 106) für den Amplituden-modulator transformiert, und

dass der Komparator (109) ein Stromkomparator ist, dass die Ausgangsgröße (Ibr) der Ladungspumpe ein Durchschlagstrom eines Drain-Substrat-Übergangs eines Transistors (T2) mit schwebender Source ist, wobei der Transistor am Ausgang der Ladungspumpe angeordnet ist, und

dass die Referenzgröße (Ipol) ein Vorstrom ist, der den Durchschlag-detektionspegel festlegt.

2. Regulierungsschaltung für Hochspannungsgenerator nach Anspruch 1, **dadurch gekennzeichnet, dass** die Regulierungsmittel aus wenigstens einem Transistor (T7) gebildet sind.

3. Regulierungsschaltung für Hochspannungsgenerator nach Anspruch 1, **dadurch gekennzeichnet, dass** der Komparator (109) einen ersten Stromspiegel (T1 und T3), der den Durchschlagstrom (Ibr) in einem ersten Zweig (B1) auf einen Knoten B spiegelt, und einen zweiten Stromspiegel (T4 und T5), der den Vorstrom (Ipol) in einem zweiten Zweig (B2) auf den Knoten B spiegelt, umfasst, wobei der Knoten B einen dritten Zweig (B3) umfasst, der von einem mit dem Vergleichs-signal (Ucomp) in Beziehung stehenden Vergleichsstrom (Icomp) durchflossen wird.

4. Regulierungsschaltung für Hochspannungsgenerator nach Anspruch 3, **dadurch gekennzeichnet, dass** der erste Stromspiegel (T1 und T3) aus einem ersten Transistor (T1) und aus einem zweiten Transistor (T3) aufgebaut ist, wobei der erste Transistor (T1) zwischen den Ausgang der Ladungspumpe (104) und den Transistor (T2) mit schwebender Source geschaltet ist, wobei der zweite Transistor (T3) zwischen den Ausgang der Ladungspumpe und den ersten Zweig (B1), der mit dem Knoten B verbunden ist, geschaltet ist, und dass der zweite Stromspiegel (T4 und T5) aus einem dritten Transistor (T5) und aus einem vierten Transistor (T4) aufgebaut ist, wobei der dritte Transistor (T5) zwischen die Quelle des Vorstroms und das Referenzpotential (Vss) geschaltet ist und wobei der vierte Transistor (T4) zwischen das Referenzpotential (Vss) und den zweiten Zweig (B2), der mit dem Knoten B verbunden ist, geschaltet ist.

5. Regulierungsschaltung für Hochspannungsgenerator nach einem der Ansprüche 3 und 4, **dadurch**

**gekennzeichnet, dass** das analoge Tiefpassfilter (105) durch eine Kapazität (Clp), die zwischen das Referenzpotential (Vss) und den dritten Zweig (B3), der mit dem Knoten B verbunden ist, geschaltet ist, und durch eine Konduktanz des zweiten und des vierten Transistors (T3 und T4) der Stromspiegel gebildet ist.

6. Regulierungsschaltung für Hochspannungsgenerator nach einem der Ansprüche 3, 4 und 5, **dadurch gekennzeichnet, dass** wenigstens ein anderer Transistor (T8, T9) am Ausgang der Ladungspumpe (104) angeordnet ist, um mit einem nichtflüchtigen Speicher verbunden zu werden.

7. Regulierungsschaltung für Hochspannungsgenerator nach einem der vorhergehenden Ansprüche, **dadurch gekennzeichnet, dass** die wenigstens zwei Taktsignale (phi, nphi) um im Wesentlichen 180° phasenverschoben sind.

8. Regulierungsschaltung für Hochspannungsgenerator nach Anspruch 1, **dadurch gekennzeichnet, dass** der Amplitudenmodulator (101) am Eingang vier Taktsignale empfängt, wobei der Modulator Regulierungsmittel und vier Inverter, die jeweils eines der Taktsignale empfangen, umfasst.

**Claims**

1. Regulating circuit for a high voltage generator, used in particular for supplying a non-volatile memory, including an amplitude modulator (3; 101) which receives at input terminals at least two clock signals (2; phi; nphi) and which supplies at output terminals at least two modulated clock signals (5; 102; 103) to a charge pump (4; 104), a feedback loop, connecting an output of the charge pump to said amplitude modulator, said loop including a comparator (8; 109) which receives at a first input terminal an output quantity (Xout; Ibr) from said charge pump and at a second input terminal a reference quantity (Xref; Ipol), and which supplies at an output a comparison signal (11; Ucomp), the amplitude modulator (101) including adjusting means (T7, T6) receiving an analogue control signal (106), said adjusting means being in series with at least one inverter (108, 107), said adjusting means allowing said inverter to be controlled by at least one control current (Icom) depending on the analogue control signal (106), **characterised in that** said feedback loop further includes an analogue low-pass filter (14; 105) at the output of said comparator converting said comparison signal into an analogue control signal (15; 106) for said amplitude modulator, and **in that** said comparator (109) is a current comparator,

**in that** said output quantity (Ibr) of the charge pump is a breakdown current of a drain-substrate junction of a transistor (T2) with a floating source, said transistor with a floating source being placed at the output of the charge pump, and **in that** said reference quantity (Ipol) is a polarisation current fixing the breakdown detection level.

2. Regulating circuit for a high voltage generator according to claim 1, **characterised in that** said adjusting means are formed of at least one transistor (T7).

3. Regulating circuit for a high voltage generator according to claim 1, **characterised in that** said comparator (109) includes a first current mirror (T1 and T3) reflecting said breakdown current (Ibr) into a first branch (B1) towards a node B and a second current mirror (T4 and T5) reflecting said polarisation current (Ipol) into a second branch (B2) towards said node B, said node B including a third branch (B3) through which a comparison current (Icomp), connected to the comparison signal (Ucomp), passes.

4. Regulating circuit for a high voltage generator according to claim 3, **characterised in that** said first current mirror (T1 and T3) is formed of a first transistor (T1) and a second transistor (T3), said first transistor (T1) being connected between the output of the charge pump (104) and said floating source transistor (T2), said second transistor (T3) being connected to the output of the charge pump and said first branch (B1) connected to node B, and **in that** said second current mirror (T4 and T5) is formed of a third transistor (T5) and a fourth transistor (T4), said third transistor (T5) being connected between the polarisation current source and a reference potential (Vss), said fourth transistor (T4) being connected between said reference potential (Vss) and said second branch (B2) connected to node B.

5. Regulating circuit for a high voltage generator according to any of claims 3 and 4, **characterised in that** said analogue low-pass filter (105) is formed by a capacitor (Clp) connected between the reference potential (Vss) and said third branch (B3) connected to node B, and by a conductance of said second and fourth transistors (T3 and T4) of the current mirrors.

6. Regulating circuit for a high voltage generator according to any of claims 3, 4 and 5, **characterised in that** at least one other transistor (T8, T9) is placed at the output of the charge pump (104) to be connected to a non-volatile memory.

7. Regulating circuit for a high voltage generator according to any of the preceding claims, **characterised in that** said at least two clock signals (phi, nphi) are substantially offset by 180°.

8. Regulating circuit for a high voltage generator according to claim 1, **characterised in that** said amplitude modulator (101) receives four clock signals at input terminals, said modulator including adjusting means and four inverters each receiving one of said clock signals.

# Fig. 1
( ART ANTERIEUR )

# Fig. 2
( ART ANTERIEUR )

Fig. 3

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9827477 A
- US 6002599 A
- JP 6351229 A
- US 5945870 A